(19) **Europäisches Patentamt**
**European Patent Office**
**Office européen des brevets**

(11) Publication number: **0 221 637 B1**

# EUROPEAN PATENT SPECIFICATION

(45) Date of publication of patent specification: **24.07.91**

(51) Int. Cl.⁵: **F16J 1/02**, F16J 10/02, F04B 39/00, F16J 1/06, F01B 31/06

(21) Application number: **86306178.4**

(22) Date of filing: **11.08.86**

(54) **Piston and cylinder apparatus.**

(30) Priority: **21.08.85 GB 8520887**

(43) Date of publication of application:
**13.05.87 Bulletin 87/20**

(45) Publication of the grant of the patent:
**24.07.91 Bulletin 91/30**

(84) Designated Contracting States:
**BE DE FR IT NL SE**

(56) References cited:
**FR-A- 2 286 295**       **GB-A- 1 535 571**
**GB-A- 3 039 834**       **US-A- 1 535 571**
**US-A- 3 039 834**       **US-A- 4 050 360**

(73) Proprietor: **BENDIX LIMITED**
**Douglas Road**
**Kingswood, Bristol BS15 2NL(GB)**

(72) Inventor: **Durrant, Jeremy James**
**6 Troopers Hill Road**
**St. George Bristol. BS5 8BT(GB)**

(74) Representative: **Turner, Alan Reginald**
**c/o Bendix Limited Douglas Road**
**Kingswood, Bristol BS15 2NL(GB)**

## Description

This invention relates to piston and cylinder apparatus and relates more especially but not exclusively to apparatus wherein a piston operates in a cylinder without oil or other added lubrication.

It has already been proposed to construct a reciprocating piston and cylinder air compressor using a metal cylinder bore and a metal piston provided with at least one suitable bearing sleeve or ring to prevent the metal parts coming into contact, Typically, the bearing ring is located in a groove provided on the peripheral surface of the piston.

A typical material for such bearing rings is P.T.F.E. (polytetrafluorethylene). Although with appropriate component design this and some other such plastics materials have tolerably good wear characteristics when operating without extra lubrication in a polished metal cylinder bore, it has a coefficient of thermal expansion which is several times, typically four times, that for aluminium. A bearing ring which is a reasonably acceptable fit between a piston and a cylinder of a compressor when cold therefore has a shortcoming of becoming an undersirably tight fit between the piston and cylinder as the compressor heats up to (say) 150°C Taking into account manufacturing tolerances, this can result in premature failure or seizing of the piston in the cylinder.

As a consequence the width of the bearing ring may need to be made to allow undesirable excessive working clearance with the result that the shortcomings of loose fit and that knocking can occur when the apparatus is cold.

One proposal for overcoming such a shortcoming is described in the Specification of United States Patent No. 3039834. A composite ring is proposed therein which consists of an other synthetic ring, offering the desired self-lubricating characteristics, which is shrunk onto an inner ring which exhibits appreciably lower thermal expansion characteristics.

The object of the invention is to overcome the above shortcomings without the need for such composite rings.

According to the invention there is provided a piston and cylinder apparatus including a cylinder of a material of a first coefficient of thermal expansion and a piston slideable within the surface of said cylinder said piston comprising a core member carrying a bearing member formed of a bearing material which is functionally compatible with the cylinder surface but which exhibits a second relatively higher thermal expansion than said cylinder characterised by said core member of the piston having a third coefficient of thermal expansion which is relatively lower than that of the cylinder, to at least partially compensate for thermal expansion of the bearing member as the operating temperature of the apparatus rises.

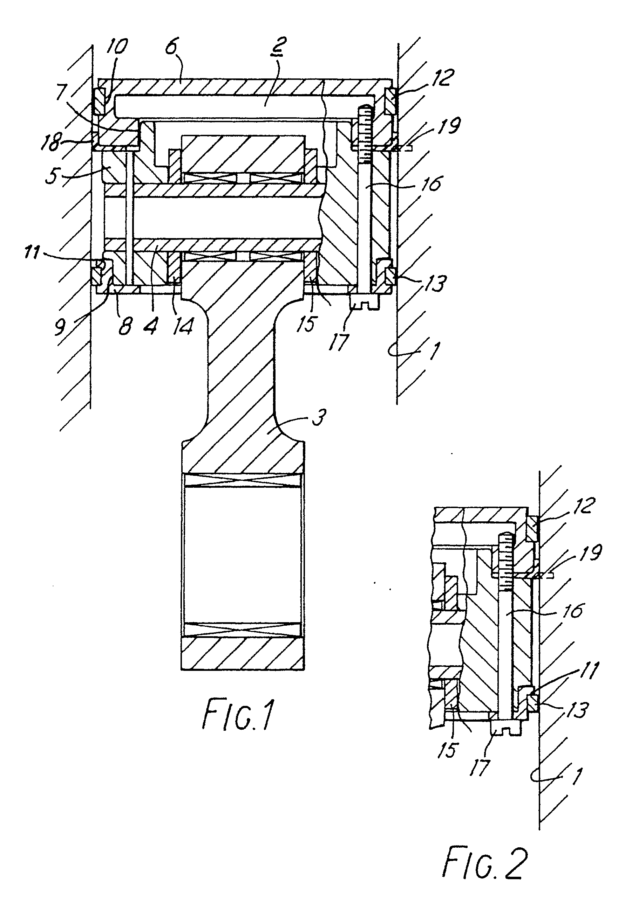

In order that the invention may be more clearly understood and readily carried into effect, one embodiment thereof will be described by way of example with reference to figures 1 and 2 of the accompanying drawing which illustrate respectively a sectional view of a piston and connecting rod in a cylinder of a reciprocating piston air compressor and a fragmentary view of modification.

Referring to the drawing a single cylinder reciprocating piston air compressor has a cylinder bore denoted by reference 1, of an aluminium cylinder and slideable in the cylinder bore there is a piston, denoted by the general reference 2, driven by a crankshaft (not shown) via a conventional connecting rod 3 pivotally connected to the piston through a gudgeon pin 4. The piston 2 comprises a main body part 5 designed to accept the gudgeon pin 4 in conventional manner, this intermediate part being conveniently cast from aluminium. The piston also has a head member 6 located on a spigot 7 of the main body part 5 and a lower skirt member 8 located on a coaxial lower spigot 9 of the part 5. The spigots 7 and 9 are machined to align the lower skirt member and the upper head member. The head member is provided with a peripheral groove 10 and the lower skirt member is provided with a peripheral groove 11, serving to locate P.T.F.E. bearing rings 12 and 13 respectively which engage the bore of the cylinder. The rings 12 and 13 have breaks to allow them to pass over members 6 and 8 and into the grooves 10 and 11. P.T.F.E. is functionally compatible with the cylinder bore and the said breaks also allow the rings to follow the circumferential thermal expansion and contraction of members 6 and 8. In order to minimise leakage past the P.T.F.E. bearing rings 12 and 13 in operation, the piston assembly also has a flexible plastics seal 18 clamped between the head member 6 and the main body part 5. As indicated at 19 this seal is initially as a flat member which is then deformable to take up its working shape when the piston is drawn downwardly into the cylinder 1.

In order to eliminate as far as possible side thrust effects between the connecting rod and the main body part 5 of the piston, thrust washers 14 and 15 are provided on each side of the connecting rod on the gudgeon pin, these being of P.T.F.E., bronze or other suitable thrust bearing material. Furthermore, as seen by the right hand additional sectional view the whole piston assembly is retained together by three equally spaced screws one of which is denoted by reference 16 with a head 17 at the skirt-end of the piston.

The head member 6 and the skirt member 8 comprise core parts in accordance with the invention formed of a material such as ferrous metal (typically, steel) of which the coefficient of thermal expansion is appreciably less than the coefficient of thermal expansion of the cylinder bore 1. As the compressor temperature rises during operation the thermal expansion of the bearing rings 12 and 13 (which have a relatively higher coefficient of thermal expansion) is therefore at least partially compensated for by the increased clearance which results as between the head member of the piston 6 and the cylinder bore 1 and the skirt member 8 and the cylinder bore 1. Component design and dimensions may therefore be achieved wherein more constant and predictable clearances are attainable between the engaging sliding surfaces of the bearing members and the cylinder. Reduced wear rate and enhanced life time for an oil-free compressor may thereby be predicted.

In the interests of minimising the maintenance costs of an air compressor employing a piston as described In the foregoing with bearing rings 12 and 13 and a seal 18, the seal 18 may be so designed and made of a material which wears and looses its efficiency before either of 12 or 13 wear down to the respective metallic member. By this means, the compressor will cease pumping properly and require replacement of the seal 18 before damage occurs due to worn down bearing rings. All wearing parts will then be replaced when replacing seal 18

A variety of adaptions and modifications of the invention may be devised and put into effect by persons skilled in such matters. For example, instead of the bearing member or members being split to enable them to be located in grooves of the or each core part of the piston as in Fig. 1, in the fragmentary view in Fig. 2, the bearing member or members may be shrunk onto the core part or parts after first heating to a temperature appreciably higher than any operating temperature of the compressor in which the piston is used and then applying to the cooler or cooled core member. In that way the or each bearing member may be retained at all times in close proximity of the respective core member and in the case of P.T.F.E. the subsequent overall radial thermal expansion may be less than otherwise. In this way closer working tolerances between the piston and the cylinder may be achieved over the operating temperature range of the compressor.

Although the cylinder is described as being of aluminium it may be of aluminium alloy or other suitable material. Again, the bearing rings may be of another material compatible with that of the cylinder.

## Claims

1. Piston and cylinder apparatus including a cylinder (1) of a material of a first coefficient of thermal expansion and a piston slideable within the surface of said cylinder said piston (4) comprising a core member (6) carrying a bearing member (12) formed of a bearing material which is functionally compatible with the cylinder (1) surface but which exhibits a second relatively higher thermal expansion than said cylinder (1) characterised by said core member (6) of the piston having a third coefficient of thermal expansion which is relatively lower than that of the cylinder (4), to at least partially compensate for thermal expansion of the bearing member as the operating temperature of the apparatus rises.

2. Piston and cylinder apparatus as claimed in claim 1, characterised by said piston (2) having bearing members (12, 13) of said bearing material disposed at or near its axial extremities.

3. Piston and cylinder apparatus as claimed in any preceding claim, characterised by said cylinder (1) being of aluminium or aluminium alloy and the or each said core member (6, 8) being of a ferrous metal.

4. Piston and cylinder apparatus as claimed in any preceding claim, characterised by an annular slideable seal member (18) located in position on the piston and located thereon axially further from the piston head than said bearing member (12), for slidingly and sealingly engaging the cylinder (1) wall.

## Revendications

1. Appareil à piston et cylindre, comprenant un cylindre (1) en un matériau ayant un premier coefficient de dilatation thermique, et un piston coulissant sur la surface intérieure du cylindre, le piston (2) comprenant une partie principale (6) portant un segment (12) fait d'un matériau pour segments qui est compatible, en fonctionnement, avec la surface du cylindre (1), mais qui possède un second coefficient de dilatation thermique relativement plos élevé que celui du cylindre, caractérisé en ce que ladite partie principale (6) du piston a un troisième coefficient de dilatation thermique qui est relativement plus faible que celui du cylindre (1) afin de compenser, au moins partiellement, la dilatation thermique du segment lorsque la température de l'appareil augmente.

2. Appareil à piston et cylindre suivant la revendi-

3

cation 1, caractérisé en ce que le piston (2) comporte des segments (12,13) formés dudit matériau, qui sont disposés à ses extrémités axiales, ou au voisinage de ces extrémités.

3. Appareil à piston et cylindre suivant l'une quelconque des revendications précédentes, caractérisé en ce que le cylindre (1) est en aluminium ou en un alliage d'aluminium, la ou chaque partie principale (6,8) du piston étant en un métal ferreux.

4. Appareil à piston et cylindre suivant l'une quelconque des revendications précédentes, caractérisé en ce qu'un segment annulaire coulissant (18) est positionné sur le piston et situé axialement sur celui-ci plus loin que le segment (12), en contact de glissement et d'étanchéité avec la paroi du cylindre (1).

**Patentansprüche**

1. Kolben- und Zylinderanordnung, umfassend einen Zylinder (1) aus einem Material mit einem ersten Wärmeausdehnungskoeffizienten, und einen Kolben, der in der Fläche des Zylinders gleiten kann und einen Kernteil (6) aufweist, welcher einen Lagerteil (12) trägt, der aus einem Lagermaterial gebildet ist, welches mit der Fläche des Zylinders (1) funktionell kompatibel ist, jedoch einen zweiten Wärmeausdehnungskoeffizienten hat, der relativ höher als derjenige des Materials des Zylinders (1) ist, dadurch gekennzeichnet, daß der Kernteil (6) des Kolbens einen dritten Wärmeausdehnungskoeffizienten hat, der relativ niedriger als derjenige des Zylinders (1) ist, um Wärmeausdehnung des Lagerteils beim Anstieg der Betriebstemperatur der Anordnung wenigstens teilweise auszugleichen.

2. Kolben- und Zylinderanordnung nach Anspruch 1, dadurch gekennzeichnet, daß der Kolben (2) aus dem genannten Lagermaterial gebildete Lagerteile (12,13) hat, die an oder nahe seinen axialen Enden angeordnet sind.

3. Kolben- und Zylinderanordnung nach irgendeinem der vorhergehenden Ansprüche, dadurch gekennzeichnet, daß der Zylinder (1) aus Aluminium oder einer Aluminiumlegierung, und der oder jeder Kernteil (6,8) aus eisenhaltigem Metall gebildet ist.

4. Kolben- und Zylinderanordnung nach irgendeinem der vorhergehenden Ansprüche, gekennzeichnet durch einen ringförmigen gleitbaren Dichtungsteil (18), der für Gleit- und Dichteingriff mit der Wand des Zylinders (1) in einer Position an dem Kolben angeordnet und an diesem von dem Kolbenkopf axial weiter entfernt positioniert ist als der Lagerteil (12).

EP 0 221 637 B1

FIG.1

FIG.2